**Europäisches Patentamt**

**European Patent Office**

**Office européen des brevets**

(19)

(11) Veröffentlichungsnummer : **0 020 893**
**B1**

(12) **EUROPÄISCHE PATENTSCHRIFT**

(45) Veröffentlichungstag der Patentschrift :
26.01.83

(51) Int. Cl.³ : **H 04 B 7/26**

(21) Anmeldenummer : **80101873.0**

(22) Anmeldetag : **08.04.80**

(54) **Funknetz.**

(30) Priorität : 08.06.79 DE 2923265

(43) Veröffentlichungstag der Anmeldung :
07.01.81 Patentblatt 81/01

(45) Bekanntmachung des Hinweises auf die Patenterteilung : 26.01.83 Patentblatt 83/04

(84) Benannte Vertragsstaaten :
**AT BE DE FR GB IT LU NL SE**

(56) Entgegenhaltungen :
**DE A 2 612 476**

**WIRELESS WORLD, Band 82, Nr. 1 492, Dezember 1976, London, GB, D. DRYBROUGH : « Mobile radio communication », Seiten 55-58.**
**ELECTRONICS WEEKLY, Nr. 586, 24. November 1971, London, GB, J. P. TITHERADGE : « Design compatibility could be achieved », Seiten 12, 13, 15.**
**THE JOURNAL OF THE IEE, Band 93, III, 1946, London, GB, J. R. BRINKLEY : « A method of increasing the range of V.H.F. communication systems by multi-carrier amplitude modulation », Seiten 159-176.**

(73) Patentinhaber : **ROBERT BOSCH GMBH**
**Postfach 50**
**D-7000 Stuttgart 1 (DE)**

(72) Erfinder : **Gorzel, Heribert, Dipl. Ing.**
**Forstweg 33 c**
**D-1000 Berlin 28 (DE)**
Erfinder : **Krause, Klaus**
**Schönwalder Strasse 35**
**D-1000 Berlin 20 (DE)**

(74) Vertreter : **Schmidt, Hans-Ekhardt**
**Robert Bosch GmbH Geschäftsbereich Elektronik Patent- und Lizenzabteilung Forckenbeckstrasse 9-13**
**D-1000 Berlin 33 (DE)**

### Funknetz

### Stand der Technik

Die Erfindung geht aus von einem Funknetz nach dem Oberbegriff des Hauptanspruchs. Es ist schon ein Funknetz bekannt (« Funkschau », 1979, Heft 5, Seite 249), das zur Sprach- und Datenübertragung dient. Das Funknetz umfaßt mehrere mobile Funkstationen, mehrere im Gelände verteilt angeordnete Relaisstationen, deren Sendeteile entsprechend den Erfordernissen für den Gleichwellenbetrieb ausgerüstet sind, sowie eine zentrale Funkstation als Leitstelle. In der Leitstelle wird jeweils der Empfänger durchgeschaltet, der von allen das beste Signal-Rausch-Verhältnis hat. Deshalb sind die Empfangsteile der Relaisstationen beispielsweise über je eine als Zubringer dienende Drahtleitung mit der Leitstelle verbunden, während der Sendeteil der Leitstelle über einen weiteren Funkkanal mit den Sendeteilen der Relaisstationen in Funkverbindung treten kann. In einer anderen bekannten Version kann anstelle der Drahtverbindungen je ein weiterer Funkkanal vorgesehen sein, so daß bei einem Funknetz mit drei Relaisstationen vier unterschiedliche Frequenzen erforderlich sind (DE-A-2 612 476).

Außerdem ist es bekannt, als Zubringer je Relaisstation einen Duplex-Kanal, das heißt also bei drei Relaisstationen sechs Zubringer-Frequenzen, vorzusehen.

### Vorteile der Erfindung

Das erfindungsgemäße Funknetz mit den kennzeichnenden Merkmalen des Hauptanspruchs hat den Vorteil, daß zur Herstellung einer Funkverbindung zwischen den Relaisstationen nur ein Funkkanal (Zubringer-Kanal) benötigt wird, und zwar unabhängig von der Anzahl der in dem Funknetz vorhandenen Relaisstationen. Ferner ermöglicht das erfindungsgemäße Funknetz einen Funkverkehr zwischen mobilen Funkteilnehmern im Gleichwellenbetrieb.

Durch die in den Unteransprüchen aufgeführten Maßnahmen sind vorteilhafte Weiterbildungen und Verbesserungen des im Hauptanspruch angegebenen Funknetzes möglich.

Besonders vorteilhaft ist es, wenn jede Relaisstation, die Signale von einer Funkstation empfängt, eine Information über den zweiten Kanal aussendet, die ein der jeweiligen Empfangsqualität entsprechendes Qualitätskriterium sowie ein für die betreffende Relaisstation charakteristisches Kennungskriterium umfaßt. Dabei wird der für den Verbindungsaufbau notwendige Vergleich der beiden Kriterien in allen Relaisstationen gleichzeitig vorgenommen.

### Zeichnung

Ausführungsbeispiele der Erfindung sind in der Zeichnung an Hand mehrerer Figuren dargestellt und in der nachfolgenden Beschreibung näher erläutert. Die Zeichnung zeigt in :

Figur 1   ein Blockschaltbild des erfindungsgemäßen Funknetzes in einer ersten Ausführungsform,

Figur 2   ein Blockschaltbild eines erfindungsgemäßen Funknetzes in einer zweiten Ausführungsform,

Figur 3   ein ausführlicheres Schaltbild einer Relaisstation mit einer Relais-Diversity-Einrichtung,

Figur 4a   eine $U_Q/T_Q$-Kennlinie mit stetig fallender Charakteristik,

Figur 4b   eine $U_Q/T_Q$-Kennlinie mit stufenweise fallender Charakteristik,

Figur 5   den zeitlichen Verlauf von Qualitäts-Kennungssignalen ($m_1$) und Relaissignalen ($m_2$) einer ersten bis dritten Relaisstation (Fig. 5a, b, c) in einer ersten Ausführungsform sowie eines Steuersignals (Fig. 5d),

Figur 6   den zeitlichen Verlauf von Qualitäts-Kennungssignalen ($m_1'$) und Relaissignalen ($m_2'$) einer ersten bis dritten Relaisstation (Fig. 6a, b, c) in einer zweiten Ausführungsform,

Figur 7   ein Zeitdiagramm des Verbindungsaufbaus für den Fall, daß nur eine Relaisstation den HF-Träger einer mobilen Station empfängt,

Figur 8   ein Zeitdiagramm des Verbindungsaufbaus für den Fall, daß zwei von drei Relaisstationen den HF-Träger einer mobilen Station empfangen, und

Figur 9   ein Zeitdiagramm des Verbindungsaufbaus für den Fall, daß drei Relaisstationen den HF-Träger einer mobilen Station empfangen.

### Beschreibung der Erfindung

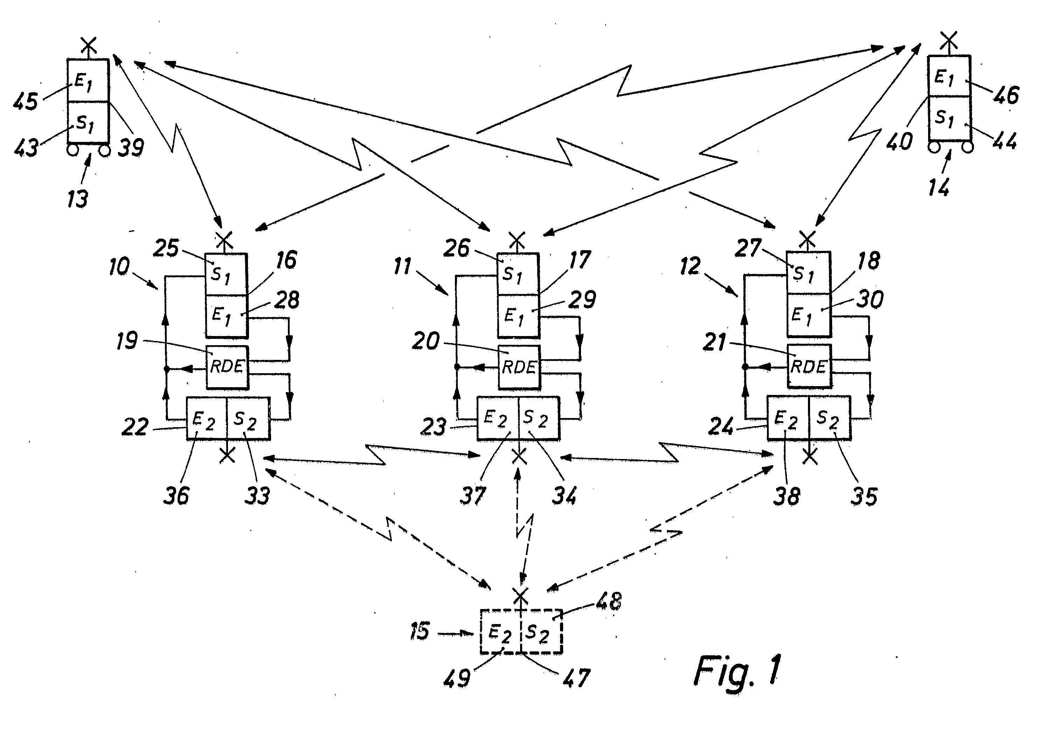

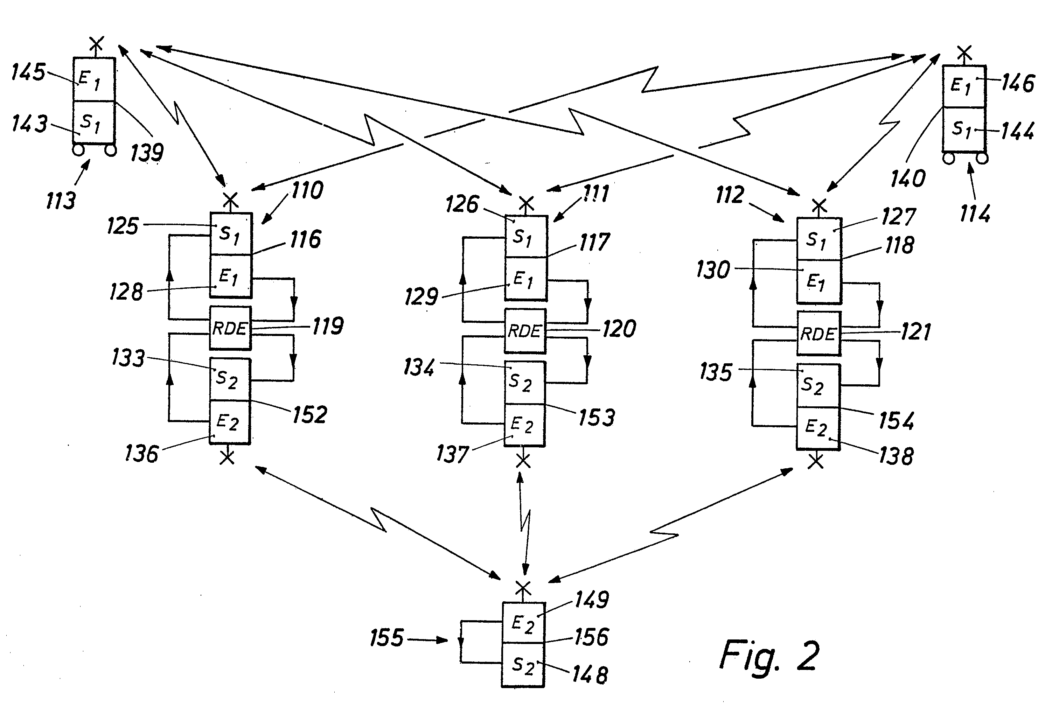

A. Netzstruktur (Fig. 1 und 2)

Die in den Fig. 1 und 2 gezeigten erfindungsgemäßen Funknetze sind für ein Funkversorgungsgebiet konzipiert, das mehrere im Gelände verteilt angeordnete Relaisstationen voraussetzt.

Zu dem Funknetz nach Fig. 1 gehören drei Relaisstationen 10, 11, 12 und zwei mobile Funkstationen 13, 14. Weiterhin kann — wie in Fig. 1 durch gestrichelte Linie angedeutet — allen Relaisstationen eine Zentralstation 15 zugeordnet sein.

Die Relaisstationen weisen je ein Duplex-Funkgerät 16, 17 und 18, je eine Relais-Diversity-Einrichtung 19, 20, 21 und je ein Simplex-Funkgerät 22, 23, 24 auf. Die Duplex-Funkgeräte 16, 17, 18 haben je einen im Oberband eines ersten Funkkanals arbeitenden Sendeteil 25, 26, 27 sowie je einen im Unterband des ersten Funkkanals arbeitenden Empfangsteil 28, 29, 30. Die Simplex-Funkgeräte 22, 23, 24 der Relaisstationen sind auf einen zweiten Funkkanal (Zubringer-Kanal) abgestimmt und weisen je einen Sendeteil 33, 34, 35 und je einen Empfangsteil 36, 37, 38 auf, die alle auf derselben Frequenz arbeiten.

Die Relais-Diversity-Einrichtungen 19, 20, 21 sind eingangsseitig mit dem Ausgang des ihnen zugeordneten Empfangsteils 28, 29, 30 und ausgangsseitig mit dem Sendeteil 33, 34, 35 sowie mit dem Sendeteil 25, 26, 27 verbunden.

Die mobilen Funkstationen 13 und 14 enthalten je ein Duplex-Funkgerät 39, 40 oder ein Semi-Duplex-Funkgerät mit je einem im Unterband des ersten Funkkanals arbeitenden Sendeteil 43, 44 und je einem im Oberband des ersten Funkkanals arbeitenden Empfangsteil 45, 46. Das Funkgerät der Zentralstation 15 ist ein auf den zweiten Funkkanal (Zubringer-Funkkanal) abgestimmtes Simplex-Funkgerät 47 mit einem Sendeteil 48 und einem Empfangsteil 49. Alle Funkgeräte 16, 17, 18, 22, 23, 24, 39, 40 und 47 weisen je eine Sende- und Empfangsantenne auf.

Das Funknetz nach Fig. 2 unterscheidet sich von dem Funknetz nach Fig. 1 im wesentlichen durch einen anderen Aufbau der Relaisstationen und der Zentralstation. Die Relaisstationen sind in Fig. 2 mit 110, 111, 112 bezeichnet und die mobilen Funkstationen mit 113, 114. Die Relaisstationen weisen je ein auf dem ersten Funkkanal arbeitendes erstes Duplex-Funkgerät 116, 117, 118 und je ein auf dem zweiten Funkkanal arbeitendes zweites Duplex-Funkgerät 152, 153 und 154 sowie je eine Relais-Diversity-Einrichtung 119, 120, 121 auf. Die bei dem Funknetz nach Fig. 2 in jedem Falle erforderliche Zentralstation 155 ist mit einem Duplex-Funkgerät 156 ausgerüstet, das auf dem zweiten Funkkanal sendet und empfängt.

Während also das Funknetz nach Fig. 1 mit einem Simplex-Zubringer-Kanal arbeitet, wird bei einem Funknetz nach Fig. 2 ein Duplex-Zubringer-Kanal angewendet.

Es wird dabei generell vorausgesetzt, daß die auf dem ersten Funkkanal sendenden Sendeteile 25, 26, 27 bzw. 125, 126, 127 aller Relaisstationen durch an sich bekannte Maßnahmen, wie zum Beispiel durch eine hohe Stabilität ihrer Sendeoszillatoren, durch geringen fest vorgegebenen Frequenzversatz oder dergleichen, für den Gleichwellenbetrieb geeignet sind.

An die Stelle der mobilen Funkstationen können auch ortsfeste Funkstationen treten. Gegebenenfalls können auch mobile und ortsfeste Funkstationen am Funkverkehr beteiligt sein.

B. Übermittlung einer Nachricht

Wird eine Nachricht von einer mobilen Funkstation, zum Beispiel der mobilen Funkstation 13 bzw. 113, auf dem ersten Funkkanal ausgesendet, so wird die Funkverbindung in weiter unten ausführlich erläuterter Weise so hergestellt, daß jeweils nur eine Relaisstation, das ist in der Regel diejenige Relaisstation (zum Beispiel 10 in Fig. 1), die die Nachricht mit ihrem Empfangsteil (zum Beispiel 28) in der bestmöglichen Qualität empfängt, die empfangene Nachricht über ihren Sendeteil (zum Beispiel 33) auf dem zweiten Funkkanal an die anderen Relaisstationen (zum Beispiel 11, 12) ausstrahlt. Außerdem wird in der Relaisstation mit der besten Empfangsqualität eine Verbindung zwischen dem Empfangsteil 28 und dem Sendeteil 25 innerhalb der Relaisstation hergestellt oder unter Ausnutzung des Zubringer-Funkkanals über den Empfangsteil 22.

Der vorstehend beschriebene Zustand der Relaisstation 10 (bzw. 110) wird im folgenden als Master-Funktion bezeichnet. Alle anderen Relaisstationen, zum Beispiel die Relaisstationen 11 und 12 bzw. 111 und 112, werden so gesteuert, daß die mit ihren Empfangsteilen 37 bzw. 137 und 38 bzw. 138 über den Zubringer-Funkkanal empfangene Nachricht auf dem ersten Funkkanal mittels der Sendeteile 26 bzw. 126 und 27 bzw. 127 ausgesendet wird. Der Zustand dieser Relaisstationen wird im folgenden als Slave-Funktion bezeichnet. Da in diesem Zustand eine Nachrichtenübermittlung nur in einer Richtung möglich ist, muß für eine Antwort in der Gegenrichtung die Verbindung neu aufgebaut werden. Dabei kann gegebenenfalls eine andere Relaisstation die Master-Funktion übernehmen. Der weiter unten ausführlicher erläuterte Verbindungsaufbau muß daher in möglichst kurzer Zeit vonstatten gehen.

Die Auswahl einer Relaisstation mit Master-Funktion und der anderen Relaisstation mit Slave-Funktion sowie die Steuerung des Verbindungsaufbaus erfolgt mittels der in jeder Relaisstation vorhandenen Relais-Diversity-Einrichtung.

Ein Funknetz nach Fig. 1 mit Simplex-Zubringer-Kanal eignet sich besonders für Elektrizitätsversorgungsunternehmen (EVU) und für Verkehrsbetriebe. Alle Relaisstationen sind bei diesem Funknetz gleichberechtigt. Eine Leitstellenfunktion kann entweder über den ersten Funkkanal von einer der mobilen Funkstationen 13, 14 oder über den zweiten Funkkanal von der Zentralstation 15 übernommen werden.

Die Nachrichtenverbindungen in einem Funknetz nach Fig. 1 werden an folgenden Beispielen erläutert :

a) von der Zentralstation (15) zu einer mobilen Funkstation (45)

```
                        ┌─► Empfangsteil 36 ──► Sendeteil 25 ──► Empfangsteil 45 (46)
   Sendeteil 48         ├─► Empfangsteil 37 ──► Sendeteil 26 ──► Empfangsteil 45 (46)
                        └─► Empfangsteil 38 ──► Sendeteil 27 ──► Empfangsteil 45 (46)
```

**0 020 893**

Alle Relaisstationen üben hierbei eine Slave-Funktion aus.

b) Von einer ersten mobilen Funkstation (13)
   zu einer zweiten mobilen Funkstation (14)

In den folgenden Aufstellungen werden der Übersichtlichkeit halber nur die Bezugszahlen der Sendeteile und Empfangsteile nach Fig. 1 und 2 verwendet.

$$43 \rightarrow 28 \rightarrow \begin{cases} \rightarrow 25 \longrightarrow 46 \\ \rightarrow 33 \begin{cases} \rightarrow 37 \rightarrow 26 \rightarrow 46 \\ \rightarrow 38 \rightarrow 27 \rightarrow 46 \\ \rightarrow (49) \end{cases} \end{cases}$$

Während die Relaisstation 10 in diesem Falle die Master-Funktion übernimmt, weisen die Relaisstationen 11 und 12 die Slave-Funktion auf. Die Verbindung zwischen dem Empfangsteil 28 und dem Sendeteil 25 der Relaisstation 10 wird innerhalb dieser Relaisstation hergestellt.

Ein Funknetz nach Fig. 2 mit einem Duplex-Zubringer-Kanal eignet sich besonders für Sicherheitsbehörden, weil bei diesen interne technische Richtlinien bestehen, die ein Funknetz nach Fig. 1 nicht zulassen. Für das Funknetz nach Fig. 2 ist die Zentralstation 155 unerläßlich. Eine Leitstellenfunktion kann entweder über den Duplex-Zubringer von der Zentralstation oder über den ersten Funkkanal (Gleichwellen-Funkkanal) von einer mobilen Funkstation 113 oder 114 übernommen werden.

Die Nachrichtenverbindung für ein Funknetz nach Fig. 2 wird an folgenden Beispielen erläutert :

a) Von der Zentralstation zu einer mobilen Funkstation

$$148 \begin{cases} \rightarrow 136 \rightarrow 125 \rightarrow 145, 146 \\ \rightarrow 137 \rightarrow 126 \rightarrow 145, 146 \\ \rightarrow 138 \rightarrow 127 \rightarrow 145, 146 \end{cases}$$

Alle Relaisstationen 110, 111, 112 übernehmen die Slave-Funktion.

b) Von einer ersten mobilen Funkstation (113)
   zu einer zweiten mobilen Funkstation (114)

$$143 \rightarrow 128 \rightarrow 133 \rightarrow 149 \rightarrow 148 \begin{cases} \rightarrow 136 \rightarrow 125 \rightarrow 146 \\ \rightarrow 137 \rightarrow 126 \rightarrow 146 \\ \rightarrow 138 \rightarrow 127 \rightarrow 146 \end{cases}$$

Die Relaisstation 110 übernimmt die Master-Funktion. Die Verbindung vom eigenen Empfangsteil 128 zum eigenen Sendeteil 125 geschieht im vorliegenden Beispiel über den Duplex-Zubringer-Kanal und den Empfangsteil 136. In einer anderen Ausführungsart kann diese Verbindung auch direkt innerhalb der Relaisstation 110 erfolgen.

Welche der beiden Möglichkeiten auszuwählen ist, hängt von den jeweiligen örtlichen Gegebenheiten und den daraus folgenden Anforderungen an den Laufzeitausgleich für den Gleichwellenbetrieb der Sendeteile 116, 117, 118 ab. Die Relaisstationen 111, 112 befinden sich in der Slave-Funktion.

C. Verbindungsaufbau

Allgemeines

Die Steuerung des Verbindungsaufbaues und die Verbindung der Modulationsleitungen von den Empfangsteilen zu den Sendeteilen sowie das Aktivieren oder Blockieren von Sendeteilen und Empfangsteilen wird von den Relais-Diversity-Einrichtungen 19, 20, 21 bzw. 119, 120, 121 nach folgenden Prinzipien gesteuert :

a) Die Steuerung erfolgt dezentral. Die Relais-Diversity-Einrichtungen aller Relaisstationen eines Funknetzes haben denselben Aufbau. Im Ruhezustand und bis zum Beginn des Verbindungsaufbaues sind alle Relaisstationen gleichberechtigt.

b) Im Ruhezustand des Funknetzes sind alle Empfangsteile der mobilen Stationen, der Relaisstationen und der Zentralstation empfangsbereit. Alle Sendeteile sind im Ruhezustand blockiert.

c) Der Verbindungsaufbau wird dadurch eingeleitet, daß eine mobile Funkstation auf dem ersten Funkkanal sendet und ein Empfangsteil oder mehrere Empfangsteile 28, 29, 30 bzw. 128, 129, 130 den HF-Träger in ausreichender Qualität empfangen. Der Empfang dieses HF-Trägers löst in den betreffenden Relaisstationen den Verbindungsaufbau synchron aus.

d) Jede Relaisstation bewertet die eigene Empfangsqualität des ersten Funkkanals und sendet, soweit für den Verbindungsaufbau erforderlich, ein der Empfangsqualität entsprechendes Qualitätskriterium zusammen mit einer die betreffende Relaisstation kennzeichnenden Relaiskennung über den zweiten Funkkanal aus. Das aus dem Qualitätskriterium und der Relaiskennung bestehende Relaissignal wird von allen Relaisstationen empfangen. In jeder Relaisstation wird, soweit für den Verbindungsaufbau erforderlich, das in dem Relaissignal enthaltene Qualitätskriterium der anderen Relaisstationen mit dem eigenen Qualitätskriterium verglichen.

e) Diejenige Relaisstation, deren Empfangsqualität am besten ist, übernimmt die Master-Funktion, das heißt, der Sendeteil 33, 34, 35 bzw. 133, 134, 135 dieser Relaisstation wird hochgetastet und die Aussendung einer von einer mobilen Funkstation ausgestrahlten Nachricht vorbereitet. Werden in zwei oder mehreren Relaisstationen gleiche bestmögliche Empfangsqualitäten ermittelt, so wird eine dieser Relaisstationen durch ihre vorher festgelegte Relaiskennung automatisch bevorzugt, so daß also nur diese Relaisstation die Master-Funktion übernimmt.

f) Die anderen Relaisstationen übernehmen die Slave-Funktion, das heißt, ihre Empfangsteile 28, 29, 30 ; 128, 129, 130 und Sendeteile 33, 34, 35 ; 133, 134, 135 werden blockiert. Von diesen Relaisstationen kann dann also die Nachricht nur über den zweiten Funkkanal empfangen werden.

g) Der Vorgang der Bewertung der Empfangsqualität und der gegenseitige Austausch der Relaissignale erfolgt, soweit für den Verbindungsaufbau erforderlich, für alle Relaisstationen gleichzeitig. Master- und Slave-Funktionen schließen sich gegenseitig aus.

h) Wird von der die Master-Funktion aufweisenden Relaisstation keine Nachricht bzw. keine Modulation mehr empfangen, so kehren nach einer kurzen Verzögerungszeit alle Relaisstationen in den Ruhezustand zurück.

i) Der Verbindungsaufbau von der Zentralstation 15 bzw. 155 über den zweiten Funkkanal wird dadurch eingeleitet, daß die Empfangsteile 36, 37, 38 bzw. 136, 137, 138 aller Relaisstationen einen HF-Träger mit ausreichender Qualität empfangen. Alle Relaisstationen übernehmen dann die Slave-Funktion.

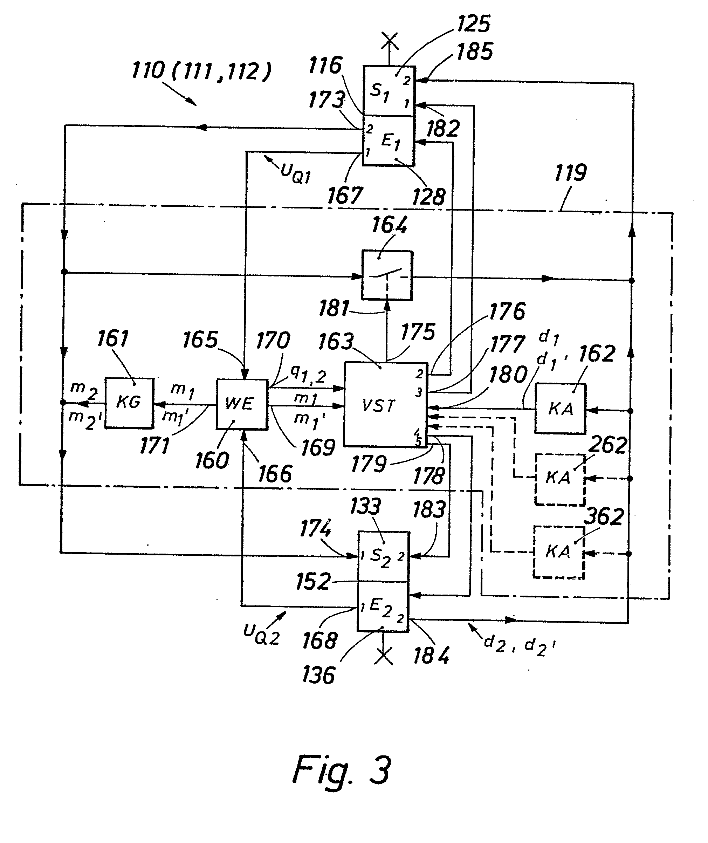

## D. Aufbau der Relais-Diversity-Einrichtungen (Fig. 3)

Die Relaisstationen können mit handelsüblichen und, soweit erforderlich, für den Gleichwellenbetrieb geeigneten Funksende- und -empfangsgeräten aufgebaut werden. Alle erforderlichen Steuerungsfunktionen übernehmen die Relais-Diversity-Einrichtungen.

In dem in Fig. 3 gezeigten Blockschaltbild einer Relaisstation, zum Beispiel der Relaisstation 110 (vgl. Fig. 2), die denselben Aufbau wie die Relaisstation 111 und 112 aufweist, ist die Relais-Diversity-Einrichtung 119 (durch strichpunktierte Linien umrahmter Schaltungsteil) ausführlicher dargestellt.

Die Relais-Diversity-Einrichtung umfaßt eine Wandlereinheit 160, einen Kennungsgeber 161, einen Kennungsauswerter 162, eine Vergleichs- und Steuerungseinheit 163 und einen Modulationsschalter 164.

Die Wandlereinheit 160 weist zwei Eingänge 165 und 166 auf, von denen der erste Eingang 165 mit einem ersten Ausgang 167 des Empfangsteils 128 des ersten Duplex-Gerätes 116 und der zweite Eingang 166 mit einem ersten Ausgang 168 des Empfangsteils 136 des zweiten Duplex-Funkgerätes 152 verbunden ist. Die Wandlereinheit 160 steht über zwei Verbindungsleitungen 169, 170 mit der Vergleichs- und Steuerungseinheit 163 und über eine dritte Verbindungsleitung 171 mit dem Kennungsgeber 161 in Verbindung. Ein Ausgang des Kennungsgebers 161 steht ebenso wie ein zweiter Ausgang 173 des Empfangsteils 128 mit einem ersten Eingang 174 des Sendeteils 133 des zweiten Duplex-Funkgerätes 152 in Verbindung.

Die Vergleichs- und Steuerungseinheit 163 hat fünf Ausgänge 175 bis 179 sowie einen Eingang 180, der mit dem Ausgang des Kennungsauswerters 162 verbunden ist. Von den Ausgängen der Vergleichs- und Steuerungseinheit 163 ist der erste Ausgang 175 mit einem Steuereingang 181 des Modulationsschalters 164, der zweite Ausgang 176 mit einem Eingang des Empfangsteils 128, der dritte Ausgang 177 mit einem ersten Eingang 182 des Sendeteils 125, der vierte Ausgang 178 mit einem Eingang des Empfangsteils 136 und der fünfte Ausgang 179 mit einem zweiten Eingang 183 des Sendeteils 133 verbunden. An einen zweiten Ausgang 184 des Empfangsteils 136 schließt sich ein zweiter Eingang 185 des Sendeteils 125 an. Der Modulationsschalter 164 liegt zwischen dem zweiten Ausgang 173 des Empfangsteils 128 und dem zweiten Eingang 185 des Sendeteils 125.

## E. Funktion der Relais-Diversity-Einrichtungen

### 1. Wandlereinheit

Die Wandlereinheit 160 (Fig. 3) hat die Aufgabe, einen von der Empfangsqualität, das heißt im einfachsten Falle von der Empfangsfeldstärke des Empfangsteils 128 abgeleiteten Spannungspegel in ein Qualitätskriterium umzuwandeln und mit einer Relaiskennung zu versehen. Im einzelnen werden folgende Aufgaben erfüllt :

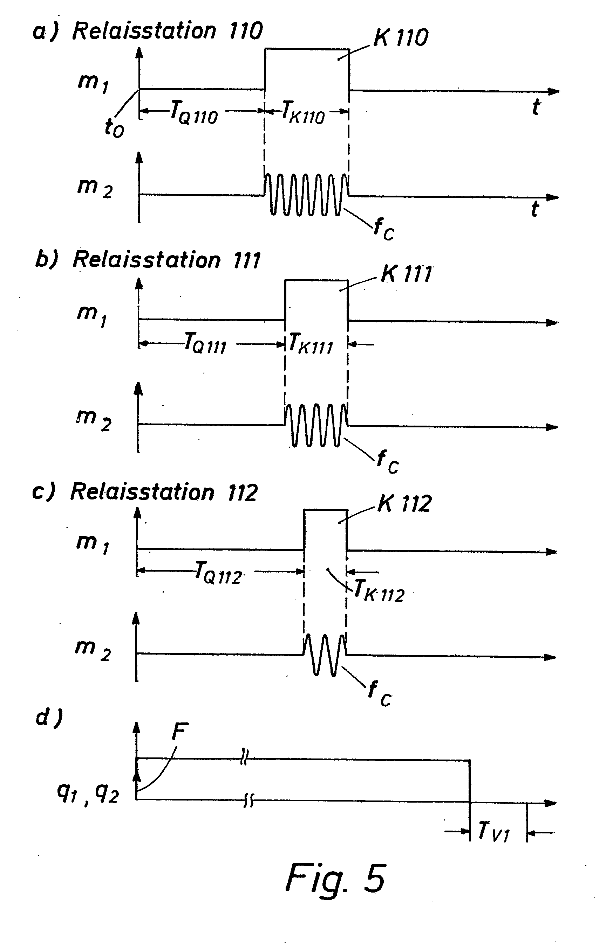

a) Beim Überschreiten einer vorgegebenen Mindestempfangsqualität, zum Beispiel $Q = Q_{min}$, liefert die Wandlereinheit ein Steuersignal $q_1$, vgl. Fig. 5d, vordere Flanke F, an die Vergleichs- und Steuerungseinheit und legt damit den Zeit-Nullpunkt für den Beginn des Verbindungsaufbaus fest. Dieser Zeit-Nullpunkt gilt gleichermaßen für alle Relaisstationen. Er synchronisiert den zeitlichen Ablauf des Verbindungsaufbaus.

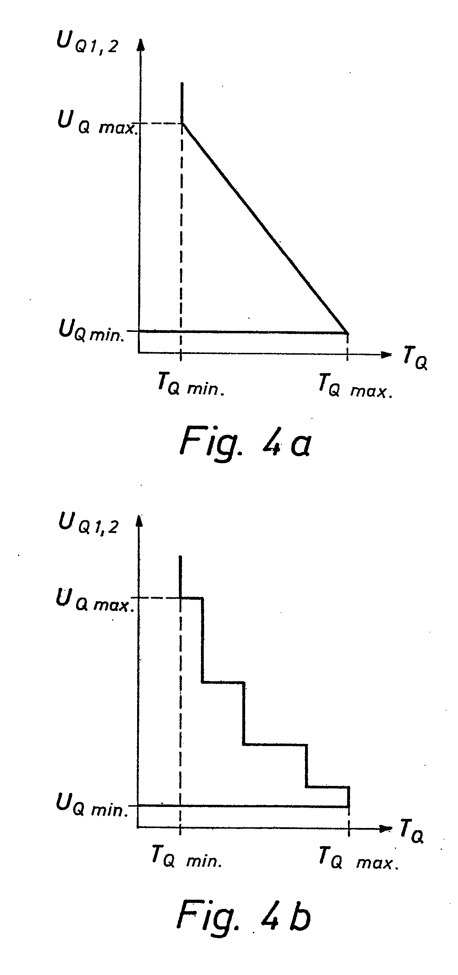

b) Umwandlung des zum Beispiel durch einen Spannungspegel $U_Q$ dargestellten Empfangsqualitätskriteriums in eine Qualitätszeit $T_Q$ (vgl. Fig. 4a, 4b). Der Zusammenhang zwischen dem Spannungspegel $U_Q$ und der Qualitätszeit $T_Q$ ist oberhalb eines vorgegebenen Schwellwertes $\hat{U}_{Qmin}$ durch eine stetig (Fig. 4a) oder sprunghaft (Fig. 4b) fallende Kennlinie in einem Bereich zwischen einem oberen und unteren Grenzwert der Qualitätszeiten $T_{Qmin}$, $T_{Qmax}$ gekennzeichnet.

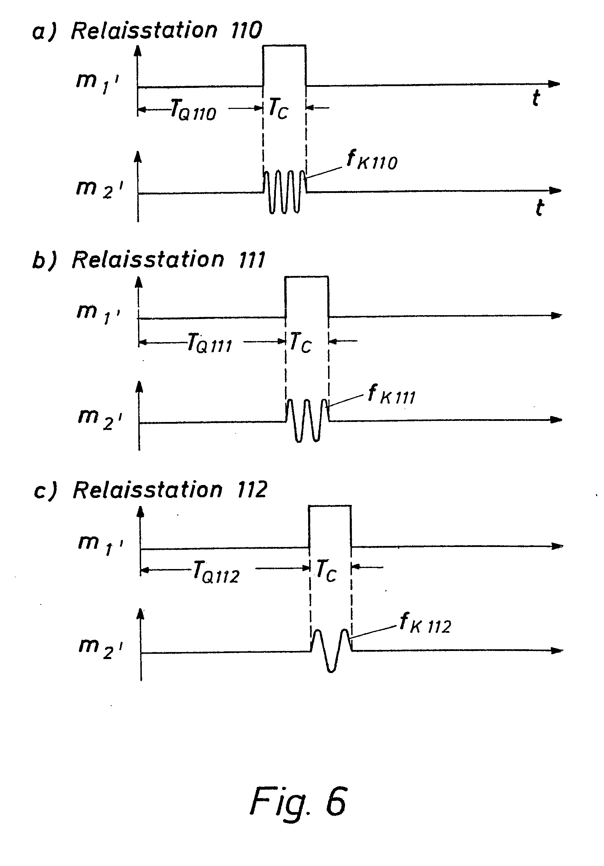

c) Der Qualitätszeit $T_Q$ wird eine Relaiskennung K angefügt. Diese ist für jede Relaisstation unterschiedlich zu wählen (vgl. Fig. 5 und 6). Die Kennung kann vorzugsweise für ein Funknetz nach Fig. 1 durch Schwingungszüge gleicher Kennungsfrequenz $f_c$ und mit von Relaisstation zu Relaisstation unterschiedlicher Kennungszeit $T_{K110}$, $T_{K111}$, $T_{K112}$ (Fig. 5) und für ein Funknetz nach Fig. 1 oder 2 durch Schwingungszüge unterschiedlicher Kennungsfrequenz $f_{K110}$, $f_{K111}$, $f_{K112}$ und gleicher Kennungsdauer $T_c$ (vgl. Fig. 6) dargestellt sein.

d) Umsetzen der Qualitätszeit $T_Q$ der Relaiskennung K in ein Qualitätskennungssignal $m_1$, $m_1'$, das alle für den Verbindungsaufbau notwendigen Informationen enthält und zu Vergleichszwecken der Vergleichs- und Steuerungseinheit 163 und dem Kennungsgeber 161 zugeführt wird.

## 2. Kennungsgeber

Der Kennungsgeber 161 (Fig. 3) erzeugt anhand des Qualitätskennungssignals $m_1$, $m_1'$ (Fig. 5, 6), das ihm von der Wandlereinheit 160 geliefert wird, ein Relaissignal $m_2$, $m_2'$, das vorzugsweise aus einem Tonfrequenzimpuls besteht. Das Relaissignal $m_2$ bzw. $m_2'$ wird dem Sendeteil 133 zugeführt.

## 3. Kennungsauswerter

Der Kennungsauswerter 162 (Fig. 3) wertet ein gegebenenfalls von dem Empfangsteil 136 empfangenes und demoduliertes Relaissignal $d_2$, $d_2'$ einer anderen Relaisstation aus und gibt an die Vergleichs- und Steuereinheit 163 das ausgewertete Relaissignal zu Vergleichszwecken ab. Während das empfangene und demodulierte Relaissignal $d_2$, $d_2'$ dem Relaissignal $m_2$ bzw. $m_2'$ entspricht, hat das von dem Kennungsauswerter 162 abgegebene Auswertersignal $d_1$, $d_1'$ einen dem Qualitäts-Kennungssignal $m_1$, $m_1'$ entsprechenden zeitlichen Verlauf.

Für den Fall, daß für eine Relaiskennung unterschiedliche Kennungsfrequenzen $f_K$ verwendet werden, ist für jede Kennungsfrequenz ein gesonderter Kennungsauswerter, zum Beispiel 162, 262, 362, erforderlich.

## 4. Vergleichs- und Steuerungseinheit

Wie bereits weiter oben erwähnt, dient die Vergleichs- und Steuerungseinheit 163 einer jeden Relaisstation 110, 111, 112 zur Aktivierung oder Blockierung der Empfangsteile der ersten Duplex-Funkgeräte 116, 117, 118 und der Sendeteile der zweiten Duplex-Funkgeräte 152, 153, 154 ; vgl. Fig. 2. Die dafür benötigten Steuerkriterien werden aus den Signalen $q_1$, $q_2$ sowie aus dem zeitlichen Vergleich der Signale $m_1$ bzw. $m_1'$ der eigenen Relaisstation mit dem Signal $d_1$, $d_1'$ einer anderen Relaisstation abgeleitet. Dabei ergeben sich folgende Zustände bzw. Funktionen :

a) Ruhezustand

Im Ruhezustand steht weder an dem Ausgang 167 des Empfangsteils 128 des ersten Duplex-Funkgerätes 116 noch an dem Ausgang 168 des Empfangsteils 136 des zweiten Duplex-Funkgerätes 152 ein Spannungspegel $U_{Q1}$, $U_{Q2}$ an, der den der vorgegebenen Mindest-Empfangsqualität entsprechenden Pegel aufweist. Die Wandlereinheit 160 gibt somit weder ein Steuersignal $q_1$ noch ein Steuersignal $q_2$ ab. Die Sendeteile 125, 133 der beiden Duplex-Funkgeräte 116, 152 sind daher blockiert und die Empfangsteile 128, 136 in Empfangsbereitschaft.

b) Sendebereitschaft auf dem ersten Funkkanal

Empfangen die Relaisstationen einen HF-Träger und hat der Spannungspegel $U_{Q1}$ am Ausgang 167 des Empfangsteils 128 des ersten Duplex-Funkgerätes 116 oder der Spannungspegel $U_{Q2}$ am Ausgang des Empfangsteils 133 einer Relaisstation den der vorgegebenen Mindest-Empfangsqualität entsprechenden Wert erreicht oder überschritten, so liefert die Wandlereinheit 160 ein Steuersignal $q_1$ oder $q_2$ an die Vergleichs- und Steuerungseinheit 163. Dadurch wird der Sendeteil 125 des ersten Duplex-Funkgerätes 116 hochgetastet und der Sendeteil 133 des zweiten Duplex-Funkgerätes 152 blockiert. Die Empfangsteile beider Duplex-Funkgeräte sind empfangsbereit. Dieser Zustand wird auch nach dem Ausbleiben der Steuersignale $q_1$ und $q_2$ für ein bestimmte Dauer $T_{V1}$ von zum Beispiel zwei bis drei Sekunden aufrechterhalten. Danach wird die Relaisstation automatisch in den Ruhezustand zurückgeführt ; vgl. Fig. 5d.

c) Aussenden der Relaiskennungen auf dem zweiten Funkkanal

Befinden sich die Relaisstationen in Sendebereitschaft, so sendet jede Relaisstation nur dann ihre eigene Relaiskennung K, das ist für die Relaisstation 110 die Relaiskennung $K_{110}$, aus, wenn sie keine Relaiskennung einer anderen Relaisstation zuvor empfangen, demoduliert, ausgewertet und der Vergleichs- und Steuerungseinheit 163 zugeführt hat. Dies gilt für das Funknetz nach Fig. 2.

d) Markierung einer Wartezeit

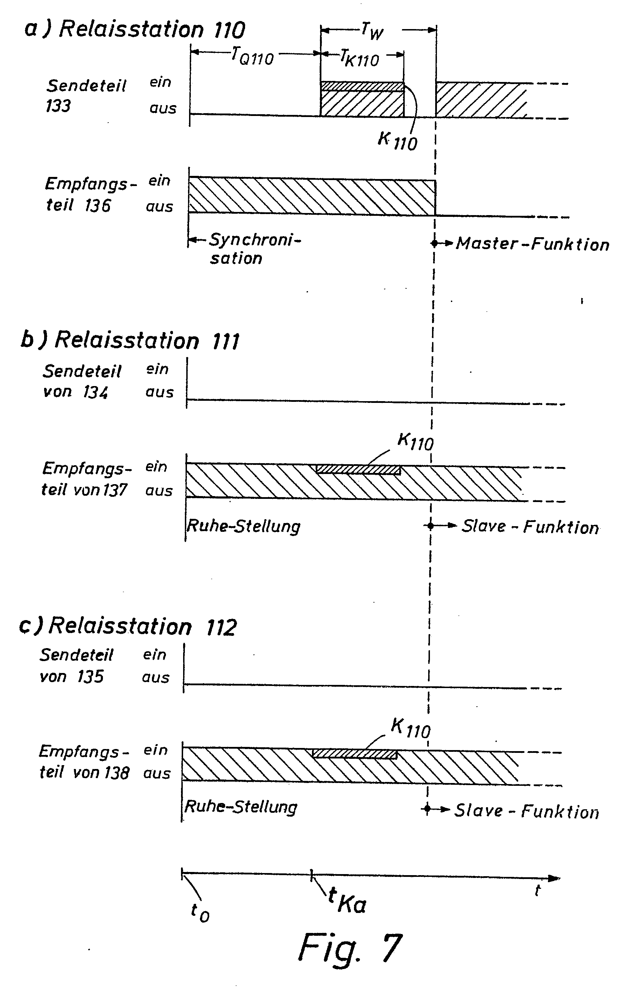

In der Vergleichs- und Steuerungseinheit 163 befindet sich ein Zeitkreis, der mit der ansteigenden Flanke der Relaiskennung K, das heißt zu einem Zeitpunkt $t_{Ka}$ (Fig. 7), gesetzt wird und der eine einer Wartezeit $T_W$ entsprechende Zeitkonstante hat, die etwas größer ist als die längste Kennungszeit $T_K$ ; vgl. Fig. 5 und 7a. Die Bedeutung der Wartezeit ist weiter unten erläutert.

e) Übernahme der Master-Funktion

Wird in einer Relaisstation, zum Beispiel der Relaisstation 110, bis zum Ende der Wartezeit $T_W$ keine Relaiskennung K einer anderen Relaisstation empfangen, demoduliert, ausgewertet und der Vergleichs- und Steuerungseinheit 163 zugeführt, dann wird nach Ablauf der Wartezeit $T_W$ der Empfangsteil 136 des zweiten Duplex-Funkgerätes 152 blockiert und der Sendeteil 133 dieses Duplex-Funkgerätes hochgetastet. Dieser Zustand bleibt auch noch nach dem Ausbleiben des Signals $q_1$ der Wandlereinheit 160 erhalten, und zwar für eine Dauer $T_{V2}$ von zum Beispiel 200 ms. Danach wird die für die Master-Funktion bestimmte Relaisstation, zum Beispiel die Relaisstation 110, automatisch in den Ruhezustand umgeschaltet, in welchem der Empfangsteil 136 empfangsbereit und der Sendeteil 133 blockiert ist.

f) Übernahme der Slave-Funktion

Trifft in einer Relaisstation, zum Beispiel der Relaisstation 111, vor dem Ablauf der eigenen Qualitätszeit $T_{Q111}$ oder in dem Zeitintervall von $T_{Q111} + T_{K111}$ bis $T_{Q111} + T_W$ eine Relaiskennung einer anderen Relaisstation, zum Beispiel 110, ein und gelangt diese nach dem Empfang, der Demodulation und der Auswertung zu der Vergleichs- und Steuerungseinheit 163, so wird sofort beim Empfang der Relaiskennung der Empfangsteil 129 des ersten Duplex-Funkgerätes der Relaisstation 111 blockiert. Dieser Zustand bleibt auch nach Wegfall der Steuersignale $q_1$, $q_2$ für die Dauer der Verzögerungszeit $T_{V2}$ von zum Beispiel 200 ms erhalten.

Der Sendeteil des ersten Duplex-Funkgerätes ist bei einer Relaisstation mit Slave-Funktion hochgetastet, der Sendeteil des zweiten Duplex-Funkgerätes blockiert und der Empfangsteil des zweiten Duplex-Funkgerätes empfangsbereit.

F. Zeitlicher Ablauf des Verbindungsaufbaus

Anhand der Fig. 7 bis 9 werden Beispiele des zeitlichen Ablaufs des Verbindungsaufbaus für die in den Fig. 1 und 2 dargestellten Funknetze beschrieben.

1. Es wird davon ausgegangen, daß sich alle Relaisstationen 10, 11, 12 bzw. 110, 111, 112 zunächst im Ruhezustand befinden. Empfängt beispielsweise nur der Empfangsteil 128 der ersten Relaisstation 110 ein Signal von der mobilen Station 113 (vgl. Fig. 2) mit ausreichender Empfangsqualität, so sendet der Sendeteil 133 dieser Relaisstation nach Ablauf der Qualitätszeit $T_{Q110}$ (vgl. Fig. 7a) die Relaiskennung $K_{110}$ aus. Weil der Empfangsteil 136 vor Ablauf der Qualitätszeit $T_{Q110}$ keine Relaiskennung von anderen Relaisstationen über den zweiten Funkkanal empfängt, wird der Sendeteil 133 nach Ablauf der Wartezeit $T_W$ hochgetastet und der Empfangsteil 136 blockiert. Damit hat die Relaisstation 110 die Master-Funktion übernommen.

Die Relaisstationen 111 und 112 verharren zunächst im Ruhezustand, weil die Empfangsteile 129, 130 kein Signal mit ausreichender Empfangsqualität empfangen. Diese Relaisstationen übernehmen jedoch durch den Empfang der über den zweiten Funkkanal ausgestrahlten Relaiskennung $K_{110}$ der Relaisstation 110 sofort die Slave-Funktion. Dieser Vorgang ist in den Fig. 7b und 7c dargestellt.

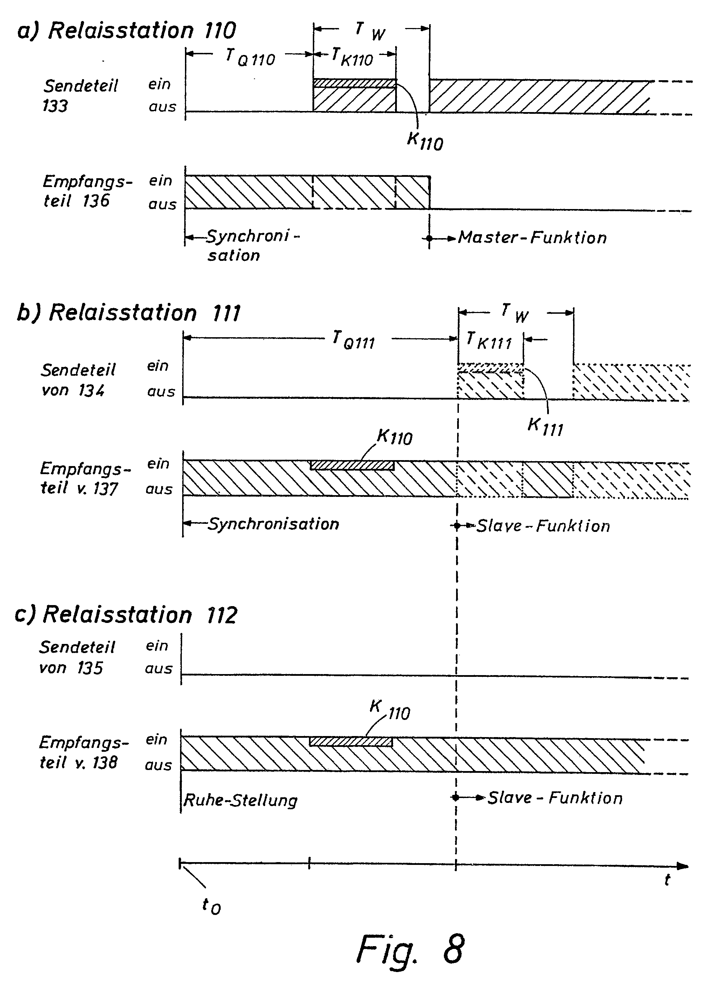

2. Empfängt beispielsweise der Empfangsteil 128 der ersten Relaisstation 110 ein Signal der mobilen Funkstation 113 mit einer ersten Empfangsqualität (Qualitätszeit $T_{Q110}$) und der Empfangsteil 129 der zweiten Relaisstation 111 ein Signal mit einer zweiten, geringeren Empfangsqualität (Qualitätszeit $T_{Q111}$), so übernimmt die Relaisstation 111 die Master-Funktion aufgrund ihrer besseren Empfangsbedingungen ; vgl. Fig. 8a. Die Relaisstationen 110 und 112 übernehmen durch den Empfang der über den zweiten Funkkanal ausgestrahlten Relaiskennung $K_{110}$ der Relaisstation 110 nach Ablauf der Wartezeit $T_W$ die Slave-Funktion. Die Aussendung der eigenen Kennung $K_{111}$ der Relaisstation 111 wird unterdrückt ; vgl. punktierte Linien in Fig. 8b. In der Relaisstation 112 wird keine eigene Qualitätsbewertung ausgelöst, da die Mindestempfangsqualität $Q_{min}$ nicht erreicht wurde ; vgl. Fig. 8c.

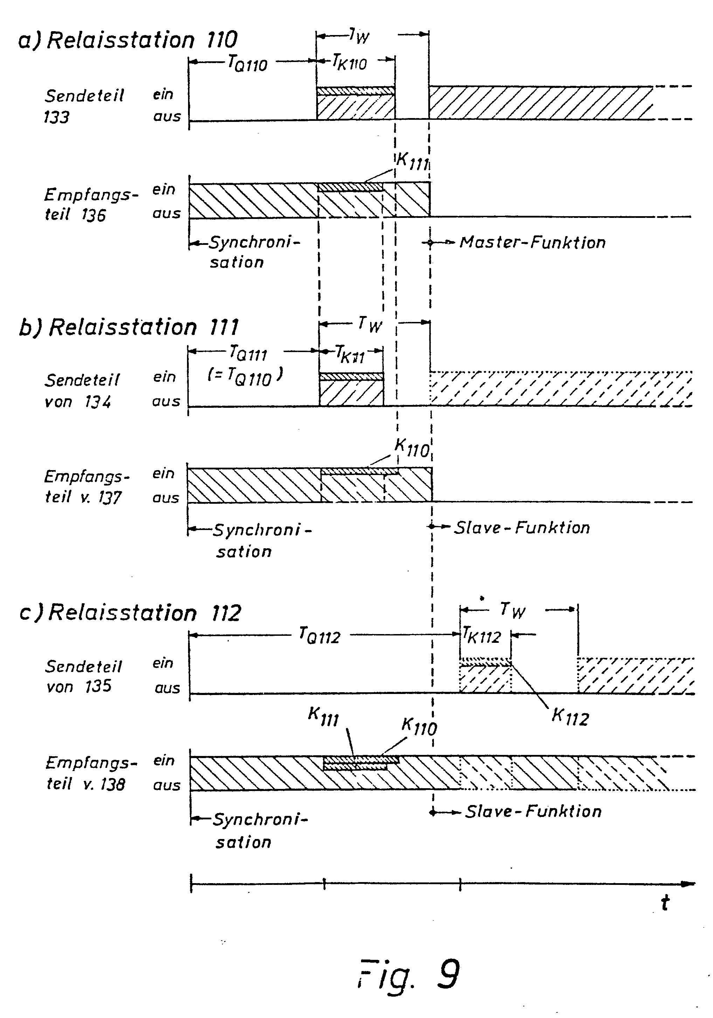

3. Es wird angenommen, daß die Empfangsteile 128, 129 der Relaisstationen 110 und 111 von einer mobilen Funkstation ein Signal mit gleicher Empfangsqualität und der Empfangsteil 130 der Relaisstation 112 das Signal mit einer geringeren Empfangsqualität empfängt, wobei jedoch die Empfangsqualitäten über der vorgegebenen Mindestempfangsqualität liegen. Die Relaisstation 110 sendet nach Ablauf der Qualitätszeit $T_{Q110}$, vgl. Fig. 9a, ihre Relaiskennung $K_{110}$, weil der Empfangsteil 136 weder vor Ablauf der Zeit $T_{Q110}$ noch in dem Zeitintervall von $T_{Q110} + T_{K110}$ bis $T_{Q110} + T_W$ eine Relaiskennung einer anderen Relaisstation über den zweiten Funkkanal empfängt. Nach Ablauf der Wartezeit $T_W$ wird der Sendeteil 133 hochgetastet und der Empfangsteil 136 blockiert. Damit hat die Relaisstation 110 die Master-Funktion übernommen.

Die Relaisstation 111 beginnt zur gleichen Zeit wie die Relaisstation 110 mit der Aussendung ihrer Kennung $T_{K111}$ ; vgl. Fig. 9b. Da der Empfangsteil 137 innerhalb des Zeitintervalls von $T_{Q111} + T_{K111}$ bis $T_{Q111} + T_W$ die Relaiskennung $K_{110}$ der Relaisstation 110 empfängt, übernimmt die Relaisstation 111 nicht die Master-Funktion, sondern die Slave-Funktion.

Wird als Relaiskennung anstelle einer Kennungszeit $T_K$ eine Kennungsfrequenz $f_K$ verwendet, so muß die Entscheidung zur Übernahme der Master- oder der Slave-Funktion aus der in der Vergleichs- und Steuerungseinheit 163 vorprogrammierten Rangfolge der Kennungsfrequenzen abgeleitet werden.

Durch den Empfang der Relaiskennung $K_{110}$, $K_{111}$ der Relaisstationen 110 und 111 übernimmt nach Ablauf der Wartezeit $T_W$ die Relaisstation 112 die Slave-Funktion, weil sie die Relaiskennungen der anderen Relaisstationen während der Qualitätszeit $T_{Q112}$ empfängt ; vgl. Fig. 9c.

**0 020 893**

Der vorstehend beschriebene zeitliche Ablauf des Verbindungsaufbaus bezog sich auf das Ausführungsbeispiel nach Fig. 2. In einem Funknetz nach Fig. 1 ist der zeitliche Ablauf insofern anders, als durch die Verwendung von Simplex-Funkgeräten die Empfangsteile 36, 37, 38 jeweils blockiert und die Sendeteile 33, 34, 35 im Sendebetrieb sind. In den Fig. 7 bis 9 sind die entsprechenden Zeitabschnitte gestrichelt dargestellt. Das Zeitintervall von $T_Q + T_K$ bis $T_Q + T_W$ ermöglicht dann auch die eindeutige Auswertung der Relaiskennungen $K_{110}$, $K_{111}$, wenn sich diese zeitlich überlappen ; vgl. Fig. 9.

**Ansprüche**

1. Funknetz mit wenigstens zwei an verschiedenen Stellen eines Gebietes befindlichen und in Funkverbindung stehenden ortsfesten Relaisstationen (10, 11, 12 ; 110, 111, 112) sowie mit mindestens zwei Funkstationen (13, 14 ; 113, 114), die über die ortsfesten Relaisstationen miteinander in Funkverbindung treten können, dadurch gekennzeichnet, daß jede Funkstation (13, 14 ; 113, 114) je ein Duplex-Funkgerät (39, 40 ; 139, 140) enthält, das auf einem ersten Funkkanal sendet und empfängt, daß jede Relaisstation (10, 11, 12 ; 110, 111, 112) erstens je ein Duplex-Funkgerät (16, 17, 18 ; 116, 117, 118) enthält, das ebenfalls auf dem ersten Funkkanal sendet und empfängt, daß jede Relaisstation (10, 11, 12 ; 110, 111, 112) zweitens entweder ein Simplex-Funkgerät (22, 23, 24) enthält, das auf einem zweiten Funkkanal sendet und empfängt, oder je ein zweites Duplex-Funkgerät (152, 153, 154) enthält, das über einen zweiten Funkkanal mit einer zusätzlichen ortsfesten Relaisstation (155), die ein Duplex-Funkgerät (156) enthält, in Funkverbindung steht, und daß jede Relaisstation (10, 11, 12 ; 110, 111, 112) drittens je eine mit beiden Funkgeräten verbundene Relais-Diversity-Einrichtung (19, 20, 21 ; 119, 120, 121) aufweist, die die Empfangsqualität der von einer Funkstation ausgesendeten Funksignale feststellt und mit den von den Relais-Diversity-Einrichtungen der anderen Relaisstationen festgestellten Empfangsqualitäten über den zweiten Funkkanal vergleicht und nur in derjenigen Relaisstation z.B. (10) mit der besten Empfangsqualität den auf den ersten Funkkanal abgestimmten Empfangsteil (28) und Sendeteil (25) mit dem auf den zweiten Funkkanal abgestimmten Sendeteil (33) und Empfangsteil (36) verbindet und in den anderen Relaisstationen (11, 12) den auf den ersten Funkkanal abgestimmten Empfangsteil (29, 30) und den auf den zweiten Funkkanal abgestimmten Sendeteil (34, 35) blockiert.

2. Funknetz nach Anspruch 1, dadurch gekennzeichnet, daß jede Relaisstation (10, 11, 12), die Signale einer Funkstation (13) empfängt, eine Information über den zweiten Kanal aussendet, die ein der jeweiligen Empfangsqualität entsprechendes Qualitätskriterium sowie ein für die betreffende Relaisstation charakteristisches Kennungskriterium umfaßt, und daß in den Relaisstationen die eigene Information mit den Informationen der anderen Relaisstationen verglichen wird.

3. Funknetz nach Anspruch 2, dadurch gekennzeichnet, daß das Empfangsqualitätskriterium eine Qualitätszeit ($T_Q$) ist, die im umgekehrten Verhältnis zur Empfangsfeldstärke steht.

4. Funknetz nach Anspruch 2, dadurch gekennzeichnet, daß das Empfangsqualitätskriterium aus einer Gleichspannung einer bestimmten, der Empfangsqualität entsprechenden Dauer ($T_Q$) besteht.

5. Funknetz nach Anspruch 2, dadurch gekennzeichnet, daß das Kennungskriterium der Relaisstationen (10, 11, 12) aus einer Wechselspannung mit gleicher Kennungsfrequenz ($f_c$) und einer bestimmten, für die betreffende Relaisstation charakteristischen Dauer ($T_K$) besteht.

6. Funknetz nach Anspruch 2, dadurch gekennzeichnet, daß das Kennungskriterium der Relaisstationen (10, 11, 12) aus einer Wechselspannung gleicher Kennungsdauer ($T_C$) und einer bestimmten, für die betreffende Relaisstation charakteristischen Kennungsfrequenz ($f_K$) besteht.

**Claims**

1. A radio network having at least two fixed relay stations (10, 11, 12 ; 110, 111, 112) which are located at different places in an area and which are in radio communication, and at least two radio stations (13, 14 ; 113, 114) which can enter into a radio link between one another by way of the fixed relay stations, characterised in that each radio station (13, 14 ; 113, 114) includes a duplex radio set (39, 40 ; 139, 140) which transmits and receives on a first radio channel, in that each relay station (10, 11, 12 ; 110, 111, 112) includes firstly a duplex radio set (16, 17, 18 ; 116, 117, 118) which also transmits and receives on the first radio channel, in that each relay station (10, 11, 12 ; 110, 111, 112) includes secondly either a simplex radio set (22, 23, 24) which transmits and receives on a second radio channel, or a second duplex radio set (152, 153, 154) which is in radio communication *via* a second radio channel with an additional fixed relay station (155) which includes a duplex radio set (156), and in that, each relay station (10, 11, 12 ; 110, 111, 112) has thirdly, a relay diversity system (19, 20, 21 ; 119, 120, 121) which is connected to the two radio sets and which establishes the reception quality of the radio signals transmitted by a radio station, and, by way of the second radio channel, compares the said reception quality with the reception qualities established by the relay diversity systems of the other relay stations and connects the receiving part (28) and the transmitting part (25) tuned to the first channel to the transmitting part (33) and the receiving part (36) tuned to the second radio channel only in that relay station (for example 110) having the best reception quality, and, in the other relay stations (11, 12), blocks the receiving part (29, 30) tuned to the

8

first radio channel and the transmitting part (34, 35) tuned to the second radio channel.

2. A radio network as claimed in claim 1, characterised in that each relay station (10, 11, 12) which receives signals from a radio station (13) transmits, by way of the second channel, information which comprises a quality criterion corresponding to the reception quality at any given time and an identification criterion characteristic of the relevant relay station, and in that the individual information in each relay station is compared with the information in the other relay stations.

3. A radio network as claimed in claim 2, characterised in that the reception quality criterion is a quality time ($T_Q$) which is inversely proportional to the incoming signal level.

4. A radio network as claimed in claim 2, characterised in that the reception quality criterion comprises a direct voltage having a predetermined duration ($T_Q$) corresponding to the reception quality.

5. A radio network as claimed in claim 2, characterised in that the identification criterion of the relay stations (10, 11, 12) comprises an alternating voltage having the same identification frequency ($f_c$) and a predetermined duration ($T_K$) characteristic of the respective relay station.

6. A radio network as claimed in claim 2, characterised in that the identification criterion of the relay stations (10, 11, 12) comprises an alternating voltage of equal identification duration ($T_C$) and a predetermined identification frequency ($f_K$) characteristic of the respective relay station.

## Revendications

1. Réseau radioélectrique comprenant au moins deux postes relais (10, 11, 12, 110, 111, 112) à position fixe se trouvant en deux emplacements différents d'un territoire et étant en liaison radio, ainsi que au moins deux postes émetteurs (13, 14 ; 113, 114) pouvant entrer en liaison radio entre eux par l'intermédiaire des postes relais à position fixe, réseau caractérisé en ce que chaque poste émetteur (13, 14 ; 113, 114) contient un appareil radio duplex (39, 40 ; 139, 140) émettant et recevant sur un premier canal radio, en ce que chaque poste relais (10, 11, 12 ; 110, 111, 112) contient premièrement un appareil radio duplex (16, 17, 18 ; 116, 117, 118) émettant et recevant également sur le premier canal radio, contient deuxièmement un appareil radio simplex émettant et recevant sur un second canal radio, ou un second appareil radio duplex (152, 153, 154) qui est en liaison par un second canal radio avec un poste relais à position fixe supplémentaire (155) contenant un appareil radio duplex (156) et en ce que chaque poste relais (10, 11, 12 ; 110, 111, 112) comporte troisièmement, un dispositif de diversion à relais (19, 20, 21 ; 119, 120, 121) respectivement relié aux deux appareils radio, ce dispositif déterminant la qualité de réception des signaux radio émis par un poste émetteur et la comparant, par le second canal radio, avec les qualités de réception déterminées par les dispositifs de diversion à relais des autres postes relais, et ne reliant que dans le poste relais (par exemple 10) ayant la meilleure qualité de réception, la partie récepteur (28) et la partie émetteur (25) accordées sur le premier canal radio avec la partie émetteur (33) et la partie récepteur (36) accordées sur le second canal radio, et bloquant, dans les autres postes relais (11, 12), la partie récepteur (29, 30) accordée sur le premier canal radio et la partie émetteur (34, 35) accordée sur le second canal radio.

2. Réseau radioélectrique selon la revendication 1, caractérisé en ce que chaque poste relais (10, 11, 12) reçoit les signaux d'un poste émetteur (13), et émet une information sur le second canal comprenant un critère de qualité correspondant à la qualité de réception actuelle, ainsi qu'un critère d'identification caractéristique du poste relais considéré, et en ce que dans les postes relais l'information propre est comparée avec les informations des autres postes relais.

3. Réseau radioélectrique selon la revendication 2, caractérisé en ce que le critère de qualité de réception est un temps de qualité ($Tq$) inversement proportionnel à l'intensité du champ de réception.

4. Réseau radioélectrique selon la revendication 2, caractérisé en ce que le critère de qualité de réception est constitué par une tension continue d'une durée déterminée ($Tq$) correspondant à la qualité de réception.

5. Réseau radioélectrique selon la revendication 2, caractérisé en ce que le critère d'identification des postes relais (10, 11, 12) est constitué par une tension alternative ayant la même fréquence caractéristique ($fc$) et une durée déterminée ($Tk$) caractéristique du poste relais considéré.

6. Réseau radioélectrique selon la revendication 2, caractérisé en ce que le critère d'identification des postes relais (10, 11, 12) est constitué par une tension alternative ayant la même durée caractéristique ($Tc$) et une fréquence caractéristique ($fk$) caractéristique du poste relais considéré.

*Fig. 1*

Fig. 2

0 020 893

*Fig. 3*

Fig. 4 a

Fig. 4 b

a) Relaisstation 110

$m_1$    K 110

$t_0$   $T_{Q110}$   $T_{K110}$   t

$m_2$    $f_C$   t

b) Relaisstation 111

$m_1$    K 111

$T_{Q111}$   $T_{K111}$

$m_2$    $f_C$

c) Relaisstation 112

$m_1$    K 112

$T_{Q112}$   $T_{K112}$

$m_2$    $f_C$

d)

F

$q_1, q_2$    $T_{V1}$

Fig. 5

a) Relaisstation 110

b) Relaisstation 111

c) Relaisstation 112

Fig. 6

## a) Relaisstation 110

$T_W$

$T_{Q110}$

$T_{K110}$

Sendeteil 133 — ein / aus

$K_{110}$

Empfangs-teil 136 — ein / aus

Synchroni-sation

Master-Funktion

## b) Relaisstation 111

Sendeteil von 134 — ein / aus

$K_{110}$

Empfangs-teil von 137 — ein / aus

Ruhe-Stellung

Slave - Funktion

## c) Relaisstation 112

Sendeteil von 135 — ein / aus

$K_{110}$

Empfangs-teil von 138 — ein / aus

Ruhe-Stellung

Slave - Funktion

$t_0$

$t_{Ka}$

$t$

## Fig. 7

7

## a) Relaisstation 110

$T_W$

$T_{Q110}$  $T_{K110}$

Sendeteil 133   ein / aus

$K_{110}$

Empfangs-teil 136   ein / aus

Synchroni-sation

Master-Funktion

## b) Relaisstation 111

$T_W$

$T_{Q111}$  $T_{K111}$

Sendeteil von 134   ein / aus

$K_{111}$

$K_{110}$

Empfangs-teil v. 137   ein / aus

Synchronisation

Slave-Funktion

## c) Relaisstation 112

Sendeteil von 135   ein / aus

$K_{110}$

Empfangs-teil v. 138   ein / aus

Ruhe-Stellung

Slave - Funktion

$t$

$t_0$

# Fig. 8

**0 020 893**

**a) Relaisstation 110**

Sendeteil 133
ein
aus

$T_W$ · $T_{Q110}$ · $T_{K110}$

Empfangs-teil 136
ein
aus

$K_{111}$

→ Synchroni-sation      → Master-Funktion

**b) Relaisstation 111**

Sendeteil von 134
ein
aus

$T_W$ · $T_{Q111}$ $(=T_{Q110})$ · $T_{K11}$

Empfangs-teil v. 137
ein
aus

$K_{110}$

→ Synchroni-sation      → Slave-Funktion

**c) Relaisstation 112**

Sendeteil von 135
ein
aus

$T_{Q112}$ · $T_W$ · $T_{K112}$ · $K_{112}$

Empfangs-teil v. 138
ein
aus

$K_{111}$  $K_{110}$

→ Synchroni-sation      → Slave-Funktion

$t$

Fig. 9